# EUROPEAN PATENT APPLICATION

(11) **EP 4 193 835 A1**
(43) Date of publication of application: **14.06.2023**
(21) Application number: 22210904.3
(22) Date of filing: 01.12.2022
(51) Int. Cl.: A01P 21/00, A01N 37/44, A01N 43/08, C05F 11/10, C05G 3/00

(54) **ANTI-STRESS/STRESS RECOVERY COMPOSITION FOR PLANTS, METHOD FOR PREVENTING AND/OR TREATING STRESS IN PLANTS**

(30) Priority: 10.12.2021 NL 2030108
(71) Applicant: Culterra Holland B.V., 8711 HD Workum (NL)
(72) Inventor: Fock, Leon Dirk, 8711 HD Workum (NL); Evers, Maurice Aloysius Antonius, 8711 HD Workum (NL)
(74) Representative: Arnold & Siedsma

(57) **Abstract**

The present invention relates to a composition, method, use, and growth medium for strengthen plants and/or reducing stress in plants, caused by biotic stress factors and/or abiotic stress factors, in plants. The composition comprises an anti-stress/stress recovery agent and an organomineral fertilizer, which enables to strengthen the plant and/or recover the plant from stress.

## Description

The present invention relates to an anti-stress/stress recovery composition, method for preventing and/or treating stress in plants making use of said composition, use of said composition, growth medium comprising said composition, and kit of parts comprising said composition.

Plants are continuously subject to stress factors from their environments. Stress results in less growth and, in some cases, even in die-off. Due to regulations chemical treatment is restricted.

It is known that stress in plants may be caused by biotic stress factors and/or abiotic stress factors. Biotic stress factors are for example diseases, pests, and weeds. Abiotic stress factors are for example temperature, light, wind, and salt. Plants can defend themselves against biotic factors to some extent by the use of colour, smell, taste and shape, but in environments with more serious biotic stress, fungicides, pesticides and herbicides, most of chemical origin, are widely used. Said treatment is undesirable as many conventional chemical compounds used to treat stress in plants are harmful and/or hazardous for the environment.

For example, it is known to increase tolerance to abiotic stresses in plants by chemically priming said plant. In such a method, stress-inducing chemical agents are introduced to the plant so that the plant begins preparing defence mechanisms. Providing said chemicals to the plant may result that said chemicals end up in the food chain.

An object of the present invention is to provide a composition for anti-stress/stress recovery in plants that obviates or at least reduces the aforementioned problems and is more efficient and/or effective compared to conventional compositions and methods.

This objective is achieved with a composition comprising an anti-stress/stress recovery agent and an organomineral fertilizer.

The composition according to the invention comprises an anti-stress/recovery agent, wherein the anti-stress/recovery agent is an anti-stress/recovery agent for plants.

The composition according to the invention may comprise an anti-stress/stress recovery agent and an organomineral fertilizer. The anti-stress/stress recovery agent enables to reduce stress in a plant and/or recover a plant from stress. As a result, efficient and effective growth of the plant is achieved.

It is noted that the composition according to the invention is formed by combining the individual compounds. As a result, a well-defined composition is achieved, and the composition may be adjusted such that it fulfils the requirements of a user. For example, the anti-stress/stress recovery agent may be added to the organomineral fertilizer. Thus, substantially pure starting products form the composition according to the invention.

Plants may suffer from stress, for example grass may suffer from stress after mowing, used for sports/events, or due to weather conditions. It is noted that weather conditions may include drought, excess of water due to an excess of rain, frost.

Furthermore, it was found that the combination of anti-stress/stress recovery agent and organomineral fertilizer has a synergetic effect on treating and/or preventing stress in plants.

An advantage of the composition according to the invention is that plants may be provided with a balance of primary nutrients, micro-nutrients, and organic elements to reduce the stress and stimulate growth. Therefore, the composition according to the invention is more efficient and effective compared to conventional treatments.

Furthermore, it was found that the composition according to the invention enables efficient root growth. As a result, the composition according to the invention provides a better uptake of plant nutrients and/or root growth stimulator(s) such as humic acids, fulvic acids, amino acids, auxins and/or alginates.

Another advantage of the composition according to the invention is that transport of for example ions and/or osmosis regulations are improved. Therefore, plants provided with the composition according to the invention experience less drought and salt stress.

Yet another advantage of the composition according to the invention, is that the composition according to the invention provided to a plant increases the resistance to cold and frost. As a result, said plants are less vulnerable for weather conditions.

Yet another advantage of the composition according to the invention is that the lignification is improved. As a result, stronger cells and/or better (controlled) uptake of salts is achieved.

Surprisingly it was found that providing all elements of the composition according to the invention at the same time to a plant, the robustness of the plant is increased. Therefore, the composition according to the invention enables a plant to protect itself to biotic and/or abiotic influences. In practice, it was found that the composition according to the invention enables to improve the robustness by increased root growth.

Yet another advantage of the composition according to the invention is that said composition is biodegradable and is not harmful and/or not hazardous for the environment.

In a preferred embodiment, the composition according to the invention is provided to a plant which experiences severe stress during use of the plant. Plants which benefit particularly well from the composition of the present invention are for example, grass, connivers, beech hedge.

In a further preferred embodiment, the composition according to the invention does not stimulate the growth of the leaf endosphere and/or phyllosphere.

For example, the anti-stress/stress recovery agent may improve the growth of root hairs.

In a preferred embodiment, the composition is substantially free from compounds derived from seaweed.

Experiments showed that is was hard, or even impossible, to separate seaweed or a residue from seaweed in different components.

In a presently preferred embodiment according to the invention, the anti-stress/stress recovery agent may be at least two or more selected from the group of ascorbic acid, *N,N,N-*trimethylglycine, d-sorbitol, d-pinitol, and menadiol. Preferably, the at least two anti-stress/stress recovery agents may be at least ascorbic acid and *N*,*N*,*N*-trimethylglycine.

It was found that when the anti-stress/stress recovery agent are at least two or more selected from the group of ascorbic acid, *N,N,N*-trimethylglycine, d-sorbitol, d-pinitol, and menadiol; root growth improves, and transport and osmosis regulation improves. In particular, when the anti-stress/stress recovery agents are ascorbic acid and *N,N,N*-trimethylglycine the stress in a plant may be reduced by at least 30% compared to a plant without treatment with the composition according to the invention. The reduction has been measured by providing the composition according to the invention to grass and weighing the roots of the treated grass and a blank after one month.

In a further presently preferred embodiment according to the invention, the ascorbic acid and *N,N,N*-trimethylglycine may be present in a ratio by weight in the range of 1:1 to 1:5, preferably present in a ratio by weight in the range of 1:1 to 1:4, more preferably present in a ratio by weight in the range of 1:1 to 1:3, even more preferably present in a ratio by weight in the range of 1:1 to 1:2, most preferably present in a ratio by weight of 1:1.

The ascorbic acid and *N,N,N*-trimethylglycine in a ratio by weight in the range of 1:1 to 1:5, preferably present in a ratio by weight in the range of 1:1 to 1:4, more preferably present in a ratio by weight in the range of 1:1 to 1:3, even more preferably present in a ratio by weight in the range of 1:1 to 1:2, most preferably present in a ratio by weight of 1:1, enables efficient and effective root growth.

Furthermore, defining the ratio of the different components in the composition according to the invention provides a well defined and predictable effect of the composition according to the invention. In other words, the composition according to the invention comprises a known composition wherein the substantially exact formulation of the composition according to the invention may be reproduced. As a result, the effect of the composition according to the invention may be well predicted.

In a preferred embodiment according to the invention, the anti-stress/stress recovery agent comprises 40 wt.% to 60 wt.% ascorbic acid and 40 wt.% to 60 wt.% *N,N,N*-trimethylglycine.

It was found that the anti-stress/stress recovery agent comprising 40 wt.% to 60 wt.% ascorbic acid and 40 wt.% to 60 wt.% *N*,*N*,*N*-trimethylglycine provides efficient and effective stress reduction in the plant. In addition, it was found that the anti-stress/stress recovery agent comprising 40 wt.% to 60 wt.% ascorbic acid and 40 wt.% to 60 wt.% *N,N,N*-trimethylglycine increases the strength of the roots of the plant.

In an alternative preferred embodiment, the anti-stress/stress recovery agent comprises 40 wt.% to 60 wt.% ascorbic acid, 40 wt.% to 60 wt.% *N*,*N*,*N*-trimethylglycine, and a sum of 10 wt.% of d-sorbitol and/or d-pinitol and/or menadiol. For example, 4 wt.% d-sorbitol and 6 wt.% menadiol.

In a further presently preferred embodiment according to the invention, the organomineral fertilizer and anti-stress/stress recovery agent may be present in a ratio by weight in the range of 100:1 to 100:20, preferably present in a ratio by weight in the range of 100:2 to 100:15, more preferably present in a ratio by weight in the range of 100:3 to 100:10, even more preferably present in a ratio by weight in the range of 100:3 to 100:8, most preferably present in a ratio by weight of 100:6.

It was found that the organomineral fertilizer and anti-stress/stress recovery agent present in a ratio by weight in the range of 100:1 to 100:20, preferably present in a ratio by weight in the range of 100:2 to 100:15, more preferably present in a ratio by weight in the range of 100:3 to 100:10, even more preferably present in a ratio by weight in the range of 100:3 to 100:8, most preferably present in a ratio by weight of 100:6, enables to achieve a robust plant.

In a preferred embodiment according to the invention, the composition comprises 80 wt.% to 99.5 wt.% organomineral fertilizer and 0.5 wt.% to 20 wt.% anti-stress/stress recovery agent, preferably the composition comprises 85 wt.% to 99 wt.% organomineral fertilizer and 1 wt.% to 15 wt.% anti-stress/stress recovery agent, more preferably the composition comprises 90 wt.% to 99 wt.% organomineral fertilizer and 1 wt.% to 10 wt.% anti-stress/stress recovery agent.

In a further presently preferred embodiment according to the invention, the organomineral fertilizer comprises one or more elements selected from the group of boron, calcium, magnesium, manganese, nitrogen, phosphorus, potassium, silicon, sodium, and sulphur. Preferably, the organomineral fertilizer comprises nitrogen, potassium, and phosphorus in a mole ratio selected from the group of 2:3:18, 4:3:18, 2:1:6, 3:1:6, 5:4:2, 5:6:2, 3:2:1, 7:6:2.

For example, the organomineral fertilizer comprises 40 mol% to 50 mol% nitrogen, 15 mol% to 25 mol% phosphorus, and 30 mol% to 40 mol% potassium. In addition, boron, calcium, magnesium, manganese, silicon, sodium, and sulphur may be present in a sum of 0.05 mol% to 8 mol%.

Said nitrogen may originate from for example ammonium sulphate, sodium nitrate, urea, calcium nitrate, ammonium nitrate, and/or may originate from (raw) organic materials such as proteins and/or plant residues. Furthermore, said phosphorus may originate from for example phosphorus pentoxide, phosphorus sulphate, and/or may originate from (raw) organic materials such as proteins and/or plant residues. In addition, potassium may originate from for example potassium oxide, potassium sulphate, potassium chloride, and/or may originate from (raw) organic materials such as proteins and/or plant residues.

Furthermore, magnesium may originate from for example magnesium oxide, manganese may originate from for example manganese(II) sulphate, sodium may originate from for example sodium chloride, calcium may originate from for example calcium nitrate, and sulphur may originate from sulphur trioxide. Said magnesium, manganese, sodium, calcium, and sulphur may also originate from (raw) organic materials such as proteins and/or plant residues.

It was found that said elements may have certain effects (Table 1).

**Table 1 shows the effect of elements of the composition according to the invention on plants.**

| Effect | Minerals |
|---|---|
| Root stimulation | NH⁴-N, P, B, Mn |
| Transport and osmoregulation | NO³-N, K |
| Resilience against cold and frost | K, Mg, Na |
| Stimulation of nutrient uptake | P, K, B, S |
| lignification | Ca, S, B, Mn, Si |

The composition according to the invention wherein the organomineral fertilizer comprises nitrogen, potassium, and phosphorus in a mole ratio selected from the group of 2:3:18, 4:3:18, 2:1:6, 3:1:6, 5:4:2, 5:6:2, 3:2:1, 7:6:2 ad/or comprises 40 mol% to 50 mol% nitrogen, 15 mol% to 25 mol% phosphorus, and 30 mol% to 40 mol% potassium improves the robustness of plants.

In a further presently preferred embodiment according to the invention, the composition further comprises one or more additive(s) selected from the group of thiamine, riboflavin, nicotinic acid, nicotinamide, nicotinamide riboside, pantothenic acid, pyridoxine, pyridoxal, pyridoxamine, biotin, glucosamine, chitosan, and chitine.

Providing one or more additive(s) enables to increase resistance against plant pathogens, such as for example bacteria, viruses, fungi and the like.

In a further presently preferred embodiment according to the invention, the composition further comprises one or more plant nutrients and/or root growth stimulator(s) selected from the group of humic acid, fulvic acid, amino acid, auxin, and alginate. Preferably, wherein the auxin may be one or more selected from the group of indole-3-acetic acid, 4-chloroindole-3-acetic acid, phenylacetic acid, indole-3-butyric acid, indole-3-propionic acid.

It was found that in particular auxin stimulates the growth of roots in plants, in particular the auxin stimulates the lateral root growth. Said root growth enables a plant to firmly attach to the surface.

In a preferred embodiment, the amino acid may be one or more selected from the group of glycine, methylglycine, dimethylglycine.

Providing a composition comprising said amino acids stimulates root growth. Therefore, plants may anchor efficiently and effectively to the surface.

In yet another preferred embodiment, the alginate may be one or more selected from the group of sodium alginate, potassium alginate, calcium alginate.

Alginic acid, also referred to as algin, is a naturally occurring, edible polysaccharide found in brown algae. An advantage of alginate is that it absorbs water quickly and that it has microencapsulation properties. Therefore, the composition according to the invention may be effectively and efficiently transported. For example, the composition may be efficiently and effectively transported into the roots of a plant.

In a further presently preferred embodiment according to the invention, the composition may be in the solid or liquid state, preferably in the solid state.

Preferably, the composition according to the invention is in the solid state, wherein the anti-stress/stress recovery and fertilizer may be combined or presented as separate pellets.

An advantage of the composition according to the invention in the solid state is that the carbon footprint is as low as possible because solvent is not transported.

In practice, a consumer may dissolve the composition according to the invention in a preferred solvent. Preferably, the solvent is water.

In a preferred embodiment, the composition according to the invention is dissolved in a solvent. Preferably the solvent is water. A dissolved composition, solution of the composition, according to the invention is ready to be used by a consumer.

The invention also relates to a method for strengthen plants and/or reducing stress in plants, comprising the step of:
- providing a composition as defined herein to a plant.

The method provides the same or similar effects and advantages as those described for the composition according to the invention.

A further advantage of the method according to the invention is that the stress in plants may be treated and/or reduced efficiently and effectively. Furthermore, providing the composition according to the invention to a plant enables an efficient and effective strengthening of the plant. As a result, plants may become more robust. This enables the plant to grow/survive in a demanding environment.

In a further presently preferred embodiment according to the invention, the composition is provided at least once per year, in particular at most four times per year to the plant, preferably provided at most three times a year to the plant, more preferably provided at most two times a year to the plant.

It was found that providing the composition at least once per year, in particular at most four times per year to the plant, preferably provided at most three times a year to the plant, more preferably provided at most two times a year to the plant enables an efficient and effective strengthening of the plant.

It is noted that the number of times that the composition is provided to the plant may vary due to the demand of the plant and/or the stress conditions to which the plant is exposed.

In a further presently preferred embodiment according to the invention, the plant is grass. Preferably, between 250 kg to 1000 kg of the composition is provided to an acre of plants in one year.

Thus, said composition comprises 80 wt.% to 99.5 wt.% organomineral fertilizer and 0.5 wt.% to 20 wt.% anti-stress/stress recovery agent, preferably the composition comprises 85 wt.% to 99 wt.% organomineral fertilizer and 1 wt.% to 15 wt.% anti-stress/stress recovery agent, more preferably the composition comprises 90 wt.% to 99 wt.% organomineral fertilizer and 1 wt.% to 10 wt.% anti-stress/stress recovery agent.

The amount of the composition provided to an acre of grass in one year, such as between 250 kg to 1000 kg of the composition, may be divided over the number of times the composition is provided to the plant. For example, if the composition is provided three times in a year to the plant, the amount provided to the plant in each round may be a percentage of the total amount provided each year. Thus, if 1000 kg of the composition is provided to the plant in one year, in the first round 60% of the total amount may be provided, in the second round 30% of the total amount may be provided, and if necessary, in the third round 10% of the total amount may be provided.

The invention also relates to the use of the composition according to the invention as a fertilizer in agriculture.

The use of the composition according to the invention provides the same or similar effects and advantages as those described for the composition and method according to the invention.

A further advantage of the use of the composition according to the invention is that a user may use the composition according to the invention without protection, since the composition is non-hazardous to the user.

The invention also relates to a growth medium comprising the composition according to the invention and a growing substrate.

The growth medium provides the same or similar effects and advantages as those described for the composition, method, and use according to the invention.

A further advantage is that the growing substrate according to the invention enables to provide a growth medium ready to be used by a consumer. Said growth medium may comprise all necessary elements to grow plants.

In a preferred embodiment, the growing substrate comprises soil. Preferably, the growth medium comprises the composition in a range of 1 wt.% to 25 wt.%, preferably in the range of 1 wt.% to 20 wt.%, more preferably in the range of 1 wt.% to 15 wt.%, even more preferably in the range of 2 wt.% to 15 wt.%, most preferably in the range of 5 wt.% to 15 wt.%.

It was found that providing the growth medium comprising the composition in a range of 1 wt.% to 25 wt.%, preferably in the range of 1 wt.% to 20 wt.%, more preferably in the range of 1 wt.% to 15 wt.%, even more preferably in the range of 2 wt.% to 15 wt.%, most preferably in the range of 5 wt.% to 15 wt.%, provides efficient and effective strengthening of the plant and reduces the stress in the plant.

Further advantages, features and details of the invention are elucidated on the basis of preferred embodiments thereof.

The experiments were performed by loading 80 holding units with about 7.5 kilos of soil (95 wt.% sand substrate and 5 wt.% (green) compost), wherein the holding unit had a top surface of about 254 cm². 1.5 grams grass seeds were provided to the top surface. The holding units were placed in a green house and watered at most once a day, with an equal amount of water depending on the temperature/whether conditions. The amount of water provided was in the range of 50 mL to 1000 mL per holding unit.

The composition according to the invention provided to the holding units comprised 1 wt.% anti-stress/stress recovery agent for Rho-A, 3 wt.% anti-stress/stress recovery agent for Rho-B, and 6 wt.% anti-stress/stress recovery agent for Rho-C, wherein the anti-stress/stress recovery agent comprises ascorbic acid and *N*,*N*,*N*-trimethylglycine in a 1:1 ratio by weight. In addition,

The total weight of the composition according to the invention provided to each holding unit was 700 kg per acre (1.78 gram per 254 cm²). The first treatment comprised 60 wt.% of the total composition according to the invention provided to the holding unit, and the second treatment comprises 40 wt.% of the total composition according to the invention provided to the holding unit.

After 45 days of establishment of the grass (turfgrass) 60 holding units were provided with the first part of the composition according to the invention. The remaining 20 holding units were used as control unit. All control units were only provided with tap water. Alle measurements were performed four times. After the holding units were provided for the first time with the composition according to the invention, all holding units were placed outside and watered at most once a day with an equal amount of water (tap water), depending on the needs of the grass.

52 days after the first treatment with the composition according to the invention, the holding units were provided with a second treatment of the composition according to the invention, except for the control units. The first measurement of the coverage, vitality, growth and recovery rate, root density, and grass index was performed 14 days after the first treatment. Thus, day 0 is the day of the first treatment.

At the same day the second treatment was provided to the holding units, the grass was mowed to a height of 40 mm before the composition according to the invention was provided o the holding unit. From than onwards, the grass was mowed every 14 days to a height of 40 mm.

Different parameters have been determined, such as the coverage of the holding unit (Table 2), the vitality of the grass held by the holding unit (Table 3), the growth and recovery rate of the grass (Table 4), the root density of the grass held by the holding (Table 5), and the grass index of the grass held by the holding unit (Table 6). The results are shown in Tables 2 to 6.

The coverage was determined by digital photo analysis measuring the percentage surface cover by green leaves per pot, wherein the digital photo was taken substantially perpendicular to the top surface of the pot at a hight of 25 centimetre, with a CANON Powershot S5 (3264 x 2448 pixels) camera.

The vitality was determined by personal judgement of two experienced turfgrass consultants giving a figure on a scale from 1 to 10, and calculating a mean score of the two scores.

The growth and recovery rate were determined by measuring turfgrass height with a polystyrene plateau placed on the turfgrass leaves and measuring the height between soil surface and polystyrene plateau. The mowing of the corresponding holding units altered compared to the other holding units. The mowing was reduced to two weeks before a measurement.

The root density was determined by personal judgement of two experienced turfgrass consultants giving a figure on a scale from 1 to 6. A mean value of both scores was calculated.

The grass index relates to the colour of the grass. The higher the grass index, the more chlorophyl is present in the grass. In other words, the darker green and more intense green the grass is. The grass index was determined by using a NDVI meter that calculates the grass index based on measured reflected red and infrared light from the turfgrass leaf surface.

**Table 2 shows the average coverage in percentage of the holding unit.**

| Day | Average of Control (4 measurements) | Average of Rho-A (4 measurements) | Average of Rho-B (4 measurements) | Average of Rho-C (4 measurements) |
|---|---|---|---|---|
| 0 | 39.5 | 41 | 46.3 | 44.3 |
| 35 | 45 | 46.3 | 50 | 50 |
| 60 | 78.8 | 77.5 | 81.3 | 82.5 |
| 74 | 71.25 | 73.75 | 76.3 | 90 |
| 121 | 67.5 | 70 | 72.5 | 76.3 |

It was found that the grass treated with the composition according to the invention provides up to 20% better coverage in comparison to the control holding unit.

**Table 3 shows the average vitality of the grass of the holding unit.**

| Day | Average of control (4 measurements) | Average of Rho-A (4 measurements) | Average of Rho-B (4 measurements) | Average of Rho-C (4 measurements) |
|---|---|---|---|---|
| 0 | 7 | 7 | 7 | 7 |
| 28 | 7 | 7.5 | 8 | 8.75 |
| 35 | 7 | 7 | 8.25 | 9 |
| 76 | 6.25 | 7 | 8 | 9 |
| 121 | 7 | 8.25 | 9 | 8.75 |

It was found that the grass treated with the composition according to the invention provides grass which is stronger and more vital in comparison to the grass held by the control holding unit.

**Table 4 shows the average growth and recovery rate in cm of the grass of the holding unit.**

| Day | Average of control (4 measurements) | Average of Rho-A (4 measurements) | Average of Rho-B (4 measurements) | Average of Rho-C (4 measurements) |
|---|---|---|---|---|
| 0 | 4 | 4 | 4 | 4 |
| 28 | 5.25 | 6.5 | 7 | 7.9 |
| 49 | 4 | 4 | 4 | 4 |
| 74 | 7.8 | 10 | 11.5 | 14 |
| 105 | 4 | 4 | 4 | 4 |
| 121 | 5.8 | 9.3 | 11.3 | 11.5 |

It was found that the grass treated with the composition according to the invention provides grass which is stronger and at least 3 centimetre longer in comparison to the grass held by the control holding unit.

**Table 5 shows the average root intensity of the grass of the holding unit.**

| Day | Average of control (4 measurements) | Average of Rho-A (4 measurements) | Average of Rho-B (4 measurements) | Average of Rho-C (4 measurements) |
|---|---|---|---|---|
| 121 | 4 | 4.8 | 4.3 | 4.8 |

It was found that the root density of the grass treated with the composition according to the invention is higher. Therefore, grass treated with the composition according to the invention is stronger.

**Table 6 shows the average grass index of the holding unit.**

| Day | Average of control (4 measurements) | Average of Rho-A (4 measurements) | Average of Rho-B (4 measurements) | Average of Rho-C (4 measurements) |
|---|---|---|---|---|
| 0 | 6.20 | 7.65 | 7.88 | 7.82 |
| 7 | 7.71 | 7.80 | 7.81 | 7.75 |
| 28 | 7.19 | 7.38 | 7.15 | 7.38 |
| 74 | 7.45 | 7.60 | 7.67 | 7.71 |
| 121 | 7.06 | 7.83 | 7.69 | 7.74 |

It was found that the grass treated with the composition according to the invention provides grass which comprises more chlorophyl and has a more intense and deeper green colour in comparison to the grass held by the control holding unit. Therefore, the treated grass was enabled to recover efficient and effectively from stress.

The present invention is by no means limited to the above described preferred embodiments and/or experiments thereof. The rights sought are defined by the following claims within the scope of which many modifications can be envisaged.

## Claims

1. Composition comprising an anti-stress/stress recovery agent and an organomineral fertilizer.

2. Composition according to claim 1, wherein the anti-stress/stress recovery agent are at least two or more selected from the group of ascorbic acid, *N*,*N*,*N*-trimethylglycine, d-sorbitol, d-pinitol, and menadiol.

3. Composition according to claim 2, wherein the at least two anti-stress/stress recovery agents are at least ascorbic acid and *N,N,N-*trimethylglycine, preferably wherein the ascorbic acid and *N,N,N*-trimethylglycine are present in a ratio by weight in the range of 1:1 to 1:5, preferably present in a ratio by weight in the range of 1:1 to 1:4, more preferably present in a ratio by weight in the range of 1:1 to 1:3, even more preferably present in a ratio by weight in the range of 1:1 to 1:2, most preferably present in a ratio by weight of 1:1.

4. Composition according to any one of the preceding claims, wherein the organomineral fertilizer and anti-stress/stress recovery agent are present in a ratio by weight in the range of 100:1 to 100:20, preferably present in a ratio by weight in the range of 100:2 to 100:15, more preferably present in a ratio by weight in the range of 100:3 to 100:10, even more preferably present in a ratio by weight in the range of 100:3 to 100:8, most preferably present in a ratio by weight of 100:6.

5. Composition according to any one of the preceding claims, wherein the organomineral fertilizer comprises one or more elements selected from the group of boron, calcium, magnesium, manganese, nitrogen, phosphorus, potassium, silicon, sodium, and sulphur, preferably wherein the organomineral fertilizer comprises nitrogen, potassium, and phosphorus in a mole ratio selected from the group of 2:3:18, 4:3:18, 2:1:6, 3:1:6, 5:4:2, 5:6:2, 3:2:1, 7:6:2.

6. Composition according to any one of the preceding claims, further comprising one or more additive(s) selected from the group of thiamine, riboflavin, nicotinic acid, nicotinamide, nicotinamide riboside, pantothenic acid, pyridoxine, pyridoxal, pyridoxamine, biotin, glucosamine, chitosan, and chitine.

7. Composition according to any one of the preceding claims, further comprising one or more root growth stimulator(s) selected from the group of humic acid, fulvic acid, amino acid, auxin, and alginate.

8. Composition according to claim 7, wherein the auxin is one or more selected from the group of indole-3-acetic acid, 4-chloroindole-3-acetic acid, phenylacetic acid, indole-3-butyric acid, indole-3-propionic acid, and/or wherein the amino acid is one or more selected from the group of glycine, methylglycine, dimethylglycine, and/or wherein the alginate is one or more selected from the group of sodium alginate, potassium alginate, calcium alginate.

9. Composition according to any one of the preceding claims, wherein the composition is in the solid state.

10. Method for strengthen plants and/or reducing stress in plants comprising the step of:
- providing a composition according to any one of the preceding claims to a plant.

11. Method according to claim 10, wherein the composition is provided at least once a year, in particular at most four times per year to the plant, preferably provided at most three times a year to the plant, more preferably provided at most two times a year to the plant.

12. Method according to claim 10 or 11, wherein the plant is grass, preferably wherein between 250 kg to 1000 kg of the composition is provided to an acre of plants in one year.

13. Use of the composition according to any one of the claims 1 to 9 as a fertilizer in agriculture.

14. Growth medium comprising a composition according to any one of the claims 1 to 9 and growing substrate.

15. Growth medium according to claim 14, wherein the growing substrate comprises soil, and/or wherein the growing substrate comprises the composition in a range of 1 wt.% to 25 wt.%, preferably in the range of 1 wt.% to 20 wt.%, more preferably in the range of 1 wt.% to 15 wt.%, even more preferably in the range of 2 wt.% to 15 wt.%, most preferably in the range of 5 wt.% to 15 wt.%.
